# EUROPEAN PATENT APPLICATION

(11) **EP 4 691 880 A1**
(43) Date of publication of application: **11.02.2026**
(21) Application number: 25191899.1
(22) Date of filing: 25.07.2025
(51) Int. Cl.: B60W 50/14, B60W 30/14

(54) **CONTROL DEVICE AND CONTROL METHOD**

(30) Priority: 05.08.2024 JP 2024129252
(71) Applicant: Robert Bosch GmbH, 70442 Stuttgart (DE)
(72) Inventor: Shoji, Tomohiro, Kanagawa 2248501 (JP)

(57) **Abstract**

The present disclosure provides a control device and a control method, in which an execution unit of the control device executes a rider assistance operation of assisting a rider, a saddle-type vehicle 1 includes at least one first camera 15 provided at a front part of the saddle-type vehicle 1 and facing forward of the saddle-type vehicle 1, and at least one second camera 16 provided at a rear part of the saddle-type vehicle 1 and facing rearward of the saddle-type vehicle 1, a blind spot area R3, which is not included in either a detection area R1 of the first camera 15 or a detection area R2 of the second camera 16, is present on a side of the saddle-type vehicle 1, and the execution unit executes a surrounding vehicle estimation, which is an estimation regarding other vehicles including an estimation of the presence or absence of the other vehicles in the blind spot area R3 based on surrounding environment information obtained by each of the first camera 15 and the second camera 16, and controls the rider assistance operation based on a result of the surrounding vehicle estimation.

## Description

### BACKGROUND OF THE INVENTION

### 1. Field of the Invention

The present disclosure relates to a control device and a control method capable of improving safety.

### 2. Description of the Background Art

In the related art, various techniques have been proposed for assisting a rider in driving a saddle-type vehicle such as a motorcycle. For example, Japanese Unexamined Patent Application Publication No. 2009-116882 discloses a driver assistance system that warns a motorcycle rider of improperly approaching an obstacle, based on information detected by a sensor device that detects obstacles in the traveling direction or substantially in the traveling direction.

### SUMMARY OF THE INVENTION

In this context, saddle-type vehicles tend to have a less stable posture compared to four-wheeled automobiles or the like, and thus, improved safety is desired. In particular, in the saddle-type vehicles, the visibility around the rider tends to be lower than in the four-wheeled automobiles, which is also a factor that makes it desirable to improve safety.

The present disclosure has been made in light of the problems described above, and provides a control device and a control method capable of improving safety.

According to the present disclosure, a control device is provided, which is a control device of a rider assistance system for assisting a rider of a saddle-type vehicle, and includes an execution unit configured to execute a rider assistance operation of assisting the rider, in which the saddle-type vehicle includes at least one first camera provided at a front part of the saddle-type vehicle and facing forward of the saddle-type vehicle, and at least one second camera provided at a rear part of the saddle-type vehicle and facing rearward of the saddle-type vehicle, a blind spot area, which is not included in either a detection area of the first camera or a detection area of the second camera, is present on a side of the saddle-type vehicle, and the execution unit is configured to execute a surrounding vehicle estimation, which is an estimation regarding other vehicles including an estimation of the presence or absence of the other vehicles in the blind spot area based on surrounding environment information obtained by each of the first camera and the second camera, and control the rider assistance operation based on a result of the surrounding vehicle estimation.

According to the present disclosure, a control method is provided, which is a control method of a rider assistance system for assisting a rider of a saddle-type vehicle, and includes executing, by an execution unit of a control device, a rider assistance operation of assisting the rider, in which the saddle-type vehicle includes at least one first camera provided at a front part of the saddle-type vehicle and facing forward of the saddle-type vehicle, and at least one second camera provided at a rear part of the saddle-type vehicle and facing rearward of the saddle-type vehicle, a blind spot area, which is not included in either a detection area of the first camera or a detection area of the second camera, is present on a side of the saddle-type vehicle, and the execution unit is configured to execute a surrounding vehicle estimation, which is an estimation regarding other vehicles including an estimation of the presence or absence of the other vehicles in the blind spot area based on surrounding environment information obtained by each of the first camera and the second camera, and control the rider assistance operation based on a result of the surrounding vehicle estimation.

With the control device and the control method according to the present disclosure, the execution unit of the control device executes the rider assistance operation of assisting the rider, the saddle-type vehicle includes at least one first camera provided at the front part of the saddle-type vehicle and facing forward of the saddle-type vehicle, and at least one second camera provided at the rear part of the saddle-type vehicle and facing rearward of the saddle-type vehicle, the blind spot area, which is not included in either the detection area of the first camera or the detection area of the second camera, is present on the sides of the saddle-type vehicle, and the execution unit is configured to execute the surrounding vehicle estimation, which is the estimation regarding other vehicles including the estimation of the presence or absence of the other vehicle in the blind spot area based on the surrounding environment information obtained by each of the first camera and the second camera, and control the rider assistance operation based on the result of the surrounding vehicle estimation. As a result, it is possible to assist the rider after determining the presence or absence of the other vehicles in the blind spot areas on the sides of the saddle-type vehicle. Consequently, safety can be improved.

### BRIEF DESCRIPTION OF THE DRAWINGS

Fig. 1 is a schematic diagram showing a general configuration of a saddle-type vehicle according to an embodiment of the present disclosure.
Fig. 2 is a block diagram showing an example of a functional configuration of a control device according to the embodiment of the present disclosure.
Fig. 3 is a diagram showing an example of a detection area of a first camera and a detection area of a second camera according to the embodiment of the present disclosure.
Fig. 4 is a flowchart showing an example of a flow of a first process executed by the control device according to the embodiment of the present disclosure.
Fig. 5 is a diagram showing a state in which another vehicle is located in a blind spot area according to the embodiment of the present disclosure.
Fig. 6 is a flowchart showing an example of a flow of a second process executed by the control device according to the embodiment of the present disclosure.
Fig. 7 is a diagram showing a state in which the other vehicle located in the blind spot area is likely to cut in front of the saddle-type vehicle according to the embodiment of the present disclosure.
Fig. 8 is a diagram showing an example of a situation in which the visibility of the second camera is reduced according to the embodiment of the present disclosure.

### DETAILED DESCRIPTION OF THE INVENTION

Hereinafter, a control device and a control method according to the present disclosure will be described below with reference to the drawings.

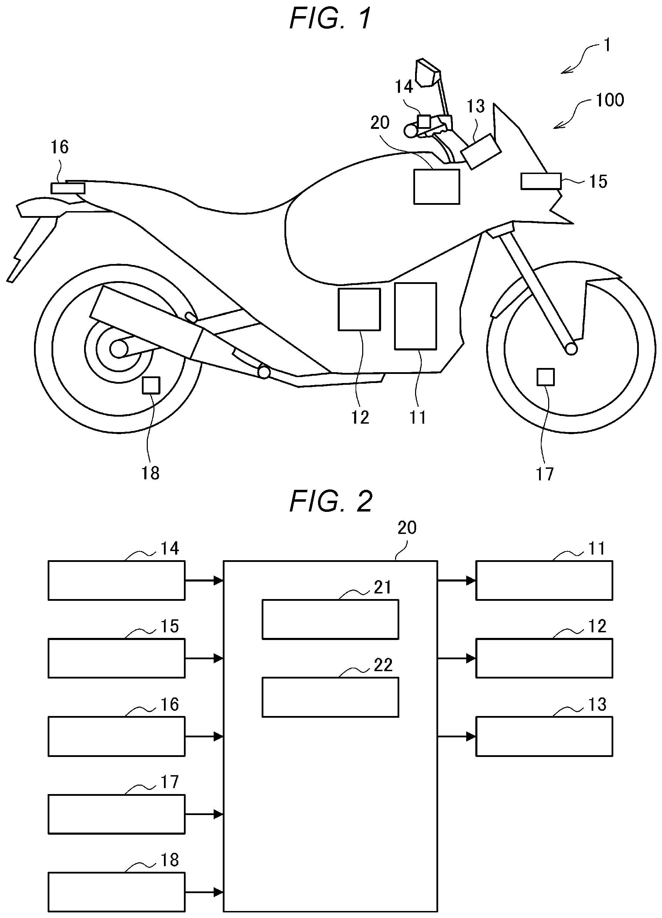

Although the control device used for a two-wheeled motorcycle is described below (see a saddle-type vehicle 1 in Fig. 1), any saddle-type vehicle other than the two-wheeled motorcycle may be the vehicle to be controlled by the control device according to the present disclosure. The saddle-type vehicle refers to a vehicle on which a rider straddles to ride. The saddle-type vehicle includes, for example, a motorcycle (a two-wheeled vehicle, a three-wheeled vehicle), a bicycle, a buggy, and the like. The motorcycle includes a vehicle including an engine as a power source, a vehicle including an electric motor as a power source, and so on. The motorcycle includes, for example, a motorcycle, a scooter, an electric scooter, and the like. The bicycle refers to a vehicle that can be propelled on the road by the rider's pedaling force applied to the pedals. Examples of the bicycle include ordinary bicycles, electrically assisted bicycles, electric bicycles, and so on.

In the following description, an example is described in which an engine (specifically, an engine 11 in Fig. 1 to be described below) is mounted as a driving source capable of outputting power to drive the driving wheel, but any driving source (e.g., an electric motor) other than the engine may be mounted as the driving source, and also, a plurality of driving sources may be mounted.

Further, in the following description, an example is described in which a control unit that controls the hydraulic pressure of the brake fluid (specifically, a hydraulic pressure control unit 12 in Fig. 1 to be described below) is employed as the control unit for the braking force generated at the wheel, but a control unit that controls the position of the braking part itself of the wheel by an electrical signal (so-called brake-by-wire) may also be employed as the control unit for the braking force generated at the wheel.

Further, the configurations, operations, and so on, which will be described below, are merely examples, and the control device and the control method according to the present disclosure are not limited to such configurations, operations, and so on.

Further, in the following description, identical or similar descriptions are simplified or omitted as appropriate. Further, in each of the drawings, the same or similar members or parts are not labeled with symbols, or labeled with the same symbols. Further, illustrations of the detailed structures are simplified or omitted as appropriate.

### <Configuration of Saddle-Type Vehicle>

A configuration of the saddle-type vehicle 1 according to the embodiment of the present disclosure will be described.

Fig. 1 is a schematic diagram showing a schematic configuration of the saddle-type vehicle 1. The saddle-type vehicle 1 is a two-wheeled motorcycle corresponding to one example of the saddle-type vehicle according to the present disclosure. As shown in Fig. 1, the saddle-type vehicle 1 includes the engine 11, the hydraulic pressure control unit 12, a display device 13, an input device 14, a first camera 15, a second camera 16, a front wheel speed sensor 17, a rear wheel speed sensor 18, and a control device (ECU) 20.

The saddle-type vehicle 1 includes a rider assistance system 100 for assisting a rider of the saddle-type vehicle 1. The rider assistance system 100 includes the components described above (specifically, the engine 11, the hydraulic pressure control unit 12, the display device 13, the input device 14, the first camera 15, the second camera 16, the front wheel speed sensor 17, the rear wheel speed sensor 18 and the control device 20).

The engine 11 corresponds to an example of a driving source of the saddle-type vehicle 1, and may output power for driving a driving wheel (specifically, a rear wheel). For example, the engine 11 includes one or more cylinders in which a combustion chamber is formed, a fuel injection valve for injecting fuel toward the combustion chamber, and a spark plug. When fuel is injected from the fuel injection valve, a mixture including air and fuel is formed in the combustion chamber, and the mixture is ignited by the spark plug and combusted. As a result, a piston provided in the cylinder reciprocates, causing a crankshaft to rotate. In addition, a throttle valve is provided in an intake pipe of the engine 11, and the amount of intake air into the combustion chamber varies depending on throttle opening, which is a degree of opening of the throttle valve.

The hydraulic pressure control unit 12 is a unit that serves to control the braking force generated at the wheel. For example, the hydraulic pressure control unit 12 is provided on an oil passage connecting a master cylinder and a wheel cylinder, and includes components (e.g., control valves and pumps) for controlling brake hydraulic pressure of the wheel cylinder. By controlling operations of the components of the hydraulic pressure control unit 12, the braking force generated at the wheel is controlled. The hydraulic pressure control unit 12 may respectively control braking forces generated on both the front wheel and the rear wheel, and may control only the braking force generated on one of the front wheel and the rear wheel.

The display device 13 has a display function for visually displaying information to the rider. Examples of the display device 13 include a liquid crystal display, or the like. For example, the display device 13 is provided in front of handlebars of the saddle-type vehicle 1. However, the arrangement of the display device 13 with respect to the vehicle body is not particularly limited.

The input device 14 is a device that receives operations from the rider. The input device 14 is, for example, provided on the handlebars and includes push buttons and the like that are used for operation by the rider. Information on the operations of the rider using the input device 14 is output to the control device 20.

Each of the first camera 15 and the second camera 16 detects surrounding environment information about the surrounding environment of the saddle-type vehicle **1.** For example, each camera may acquire the surrounding environment information by capturing images showing the surroundings of the saddle-type vehicle 1 and executing image processing on the obtained images.

The first camera 15 is provided at a front part of the saddle-type vehicle 1 (for example, at a front part of a body) and faces forward of the saddle-type vehicle **1.** Accordingly, the first camera 15 captures images of the front of the saddle-type vehicle 1 and acquires the surrounding environment information of the front of the saddle-type vehicle **1.** The number of the first camera 15 is one. However, the number of the first cameras 15 may be two or more.

The second camera 16 is provided at a rear part of the saddle-type vehicle 1 (for example, at a rear part of the body) and faces rearward of the saddle-type vehicle 1. Accordingly, the second camera 16 captures images of the rear of the saddle-type vehicle 1 and acquires the surrounding environment information of the rear of the saddle-type vehicle 1. The number of the second camera 16 is one. However, the number of the second cameras 16 may be two or more.

The surrounding environment information detected by each of the first camera 15 and the second camera 16 may include information (e.g., relative position, relative distance, relative speed, relative acceleration, etc.) related to a distance or direction to an object located in the vicinity of the saddle-type vehicle 1, or features of the object (e.g., type of object, shape of the object itself, a mark attached to the object, or the like) located in the vicinity of the saddle-type vehicle 1.

The front wheel speed sensor 17 is a wheel speed sensor that detects a wheel speed (e.g., the number of rotations per unit time [rpm], moving distance [km/h] per unit time of the front wheel, or the like) of the front wheel and outputs the detection result. The front wheel speed sensor 17 may be a sensor that detects other physical quantities that can be substantially converted into the wheel speed of the front wheel. The front wheel speed sensor 17 is provided on the front wheel.

The rear wheel speed sensor 18 is a wheel speed sensor that detects the wheel speed (e.g., the number of rotations per unit time [rpm], moving distance [km/h] per unit time of the rear wheel, or the like) of the rear wheel and outputs the detection result. The rear wheel speed sensor 18 may be a sensor that detects other physical quantities that can be substantially converted into the wheel speed of the rear wheel. The rear wheel speed sensor 18 is provided on the rear wheel.

The control device 20 controls the operation of the rider assistance system 100. For example, part or all of the control device 20 includes a microcontroller, a microprocessor unit, or the like. For example, part or all of the control device 20 may include firmware or other updatable items, or may be program modules that are executed by commands from a CPU or other device. For example, the control device 20 may be a single device, or may be divided into a plurality of devices.

Fig. 2 is a block diagram showing an example of a functional configuration of the control device 20. As shown in Fig. 2, the control device 20 includes, for example, an acquisition unit 21 and an execution unit 22. The control device 20 communicates with each device (e.g., the engine 11, the hydraulic pressure control unit 12, the display device 13, the input device 14, the first camera 15, the second camera 16, the front wheel speed sensor 17, and the rear wheel speed sensor 18) of the rider assistance system 100. The control device 20 may also control the operation of each device (e.g., the engine 11, the hydraulic pressure control unit 12, and the display device 13) of the rider assistance system 100.

The acquisition unit 21 acquires information from each device of the rider assistance system 100. For example, the acquisition unit 21 acquires the information from the input device 14, the first camera 15, the second camera 16, the front wheel speed sensor 17, and the rear wheel speed sensor 18. In addition, in the present description, acquiring the information may include extracting or generating (e.g., computing) the information.

The execution unit 22 executes a rider assistance operation of assisting the rider. For example, the execution unit 22 executes, as the rider assistance operation, a notification operation of notifying the rider. In the notification operation, the execution unit 22 uses, for example, the display device 13 to notify the rider. For example, the execution unit 22 executes, as the rider assistance operation, a speed control operation of automatically controlling the speed of the saddle-type vehicle 1.

Hereinafter, a control mode in which adaptive cruise control is executed will be described as an example of the speed control operation. The adaptive cruise control corresponds to an example of a positional relationship adjustment operation of adjusting a positional relationship between the saddle-type vehicle 1 and a preceding vehicle of the saddle-type vehicle 1 to a target positional relationship. However, the positional relationship adjustment operation may be, for example, an operation in which the target positional relationship changes according to an amount of throttle operation by the rider.

For example, when the saddle-type vehicle 1 is powered on, the control mode is not executed, and when a switching operation using the input device 14 is executed by the rider, the execution unit 22 executes the control mode. In addition, during the execution of the control mode, the state of the control mode can transition between a state in which the adaptive cruise control is actually executed and a state in which the adaptive cruise control is temporarily suspended.

Specifically, when the preceding vehicle is detected by the first camera 15, the preceding vehicle is set as a target for positional relationship adjustment. When the preceding vehicle is thus set as the target for positional relationship adjustment, the adaptive cruise control is executed, and the positional relationship between the saddle-type vehicle 1 and the preceding vehicle is adjusted to the target positional relationship. As a result, a following driving, in which the saddle-type vehicle 1 follows the preceding vehicle, is achieved.

In the adaptive cruise control, for example, a target passing time difference, which is a target value of a passing time difference between the saddle-type vehicle 1 and the preceding vehicle (specifically, the time it takes from the current time for the saddle-type vehicle 1 to pass the current position of the preceding vehicle) is set, and the execution unit 22 controls the speed of the saddle-type vehicle 1 so that the passing time difference is maintained at the target passing time difference. That is, the positional relationship in which the passing time difference matches the target passing time difference corresponds to the target positional relationship. For example, the acquisition unit 21 may acquire the passing time difference based on the surrounding environment information of the saddle-type vehicle 1, and the execution unit 22 may control the speed of the saddle-type vehicle 1 as described above based on the passing time difference acquired as described above.

However, in the adaptive cruise control, for example, a target inter-vehicle distance, which is a target value of the inter-vehicle distance between the saddle-type vehicle 1 and the preceding vehicle, may be set, and the execution unit 22 may control the speed of the saddle-type vehicle 1 so that the inter-vehicle distance is maintained at the target inter-vehicle distance. In this case, the positional relationship in which the inter-vehicle distance matches the target inter-vehicle distance corresponds to the target positional relationship. The inter-vehicle distance may refer to a distance in a direction along a lane where the saddle-type vehicle 1 is traveling, and may refer to a linear distance between the saddle-type vehicle 1 and the preceding vehicle. For example, the acquisition unit 21 may acquire the inter-vehicle distance based on the surrounding environment information of the saddle-type vehicle 1, and the execution unit 22 may control the speed of the saddle-type vehicle 1 as described above based on the inter-vehicle distance acquired as described above.

The execution unit 22 may control the speed of the saddle-type vehicle 1 based on information about the speed of the saddle-type vehicle 1 acquired based on the wheel speed of the front wheel and the wheel speed of the rear wheel, for example. For example, the execution unit 22 may control the operation of the engine 11 to control the driving force acting on the saddle-type vehicle 1. In addition, for example, the execution unit 22 may control the operation of the hydraulic pressure control unit 12 to control the braking force acting on the saddle-type vehicle 1. As a result, in the adaptive cruise control, the execution unit 22 may automatically control the speed of the saddle-type vehicle 1 without relying on acceleration and deceleration operations (that is, throttle and brake operations) by the rider.

When there is no preceding vehicle in front of the saddle-type vehicle 1 and within a predetermined range of the saddle-type vehicle 1, and the preceding vehicle is not detected, the adaptive cruise control is temporarily suspended. In this case, the execution unit 22 adjusts the speed of the saddle-type vehicle 1 to the target speed. As a result, the saddle-type vehicle 1 travels at an approximately constant speed. For example, the target speed is set in advance and stored in a storage device of the control device 20. Further, the rider may be able to manually set the target speed.

### <Operation of Control Device>

The operation of the control device 20 according to an embodiment of the present disclosure will be described.

As described above, the saddle-type vehicle 1 includes the first camera 15 provided in the front part of the saddle-type vehicle 1 and the second camera 16 provided in the rear part of the saddle-type vehicle 1. Then, the first camera 15 may acquire, as the surrounding environment information, information on an object such as a preceding vehicle of the saddle-type vehicle 1 which is located in front of the saddle-type vehicle 1. Further, the second camera 16 may acquire, as the surrounding environment information, information on an object such as a following vehicle of the saddle-type vehicle 1 which is located behind the saddle-type vehicle 1. Accordingly, by using each camera to determine the surrounding situation of the saddle-type vehicle 1 in place of the eyes of the rider and executing the rider assistance operation, safety can be improved. However, there are also areas where the vehicle cannot be directly detected by each camera.

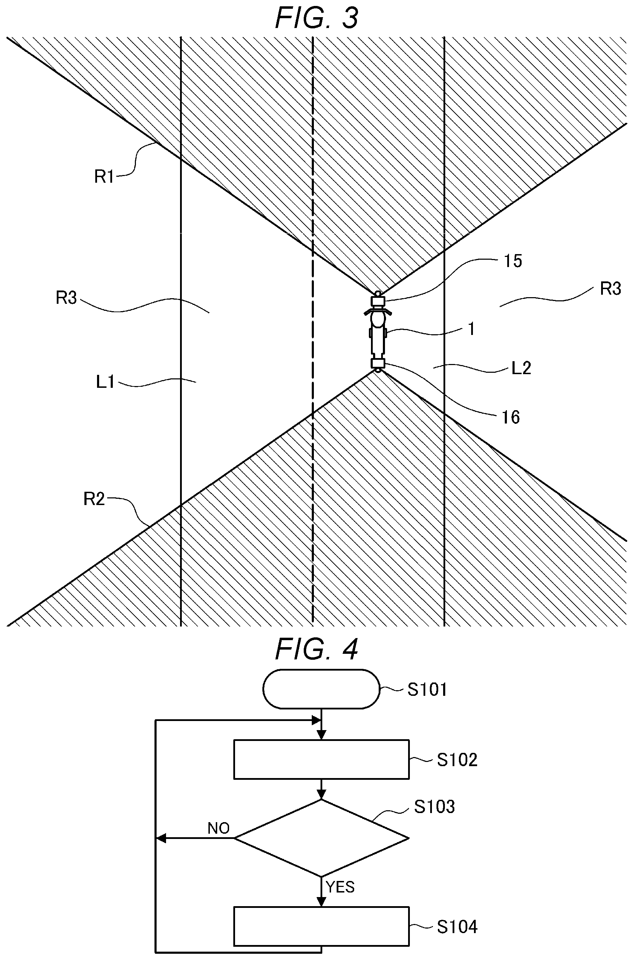

Fig. 3 is a diagram showing an example of a detection area R1 of the first camera 15 and a detection area R2 of the second camera 16. In the example of Fig. 3, a left lane L1 and a right lane L2 are adjacent to each other with a lane boundary therebetween. The saddle-type vehicle 1 travels in the lane L2. The detection area R1 extends radially forward from the front part of the saddle-type vehicle 1. Then, the first camera 15 may acquire, as the surrounding environment information, information about an object such as a vehicle located in the detection area R1. In addition, the detection area R2 extends radially rearward from the rear part of the saddle-type vehicle 1. Then, the second camera 16 may acquire, as the surrounding environment information, information about an object such as a vehicle located in the detection area R2.

As shown in Fig. 3, blind spot areas R3, which are not included in either the detection area R1 of the first camera 15 or the detection area R2 of the second camera 16, are present on the sides of the saddle-type vehicle 1. Specifically, there are the blind spot areas R3 present on the left side and the right side of the saddle-type vehicle 1, respectively. In addition, the blind spot area R3 may be present on only one of the left side and the right side of the saddle-type vehicle 1. A vehicle located in the blind spot area R3 is not directly detected by each camera. Among the surrounding areas, it is particularly difficult for the rider to visually recognize the blind spot area R3. For example, while the saddle-type vehicle 1 is traveling, it is difficult for the rider to turn his or her head and visually recognize the side areas. In addition, for example, the blind spot area R3 is hard to be seen in the side mirror of the saddle-type vehicle 1. Accordingly, determining the presence or absence of other vehicles in the blind spot area R3 becomes especially important for improving safety.

Accordingly, in this embodiment, as described below, the execution unit 22 executes a surrounding vehicle estimation, which is an estimation regarding other vehicles including an estimation of the presence or absence of the other vehicles in the blind spot area R3, based on the surrounding environment information obtained by each of the first camera 15 and the second camera 16, and controls the rider assistance operation based on the result of the surrounding vehicle estimation. As a result, as described below, by determining the presence or absence of the other vehicles in the blind spot areas R3 on the sides of the saddle-type vehicle 1 and then assisting the rider, the improved safety is achieved. Hereinafter, as an example of the example processes executed by the control device 20, first and second processes, which are example processes related to the surrounding vehicle estimation, will be described in order.

Fig. 4 is a flowchart showing an example of a flow of the first process executed by the control device 20. The control flow shown in Fig. 4 starts, for example, when a power of the saddle-type vehicle 1 is turned on. S101 in Fig. 4 corresponds to the start of the control flow shown in Fig. 4.

When the control flow shown in Fig. 4 starts, in S102, the execution unit 22 estimates the presence or absence of other vehicles in the blind spot area R3.

In S102, the execution unit 22 estimates the presence or absence of other vehicles in the blind spot area R3 based on the surrounding environment information obtained by each of the first camera 15 and the second camera 16.

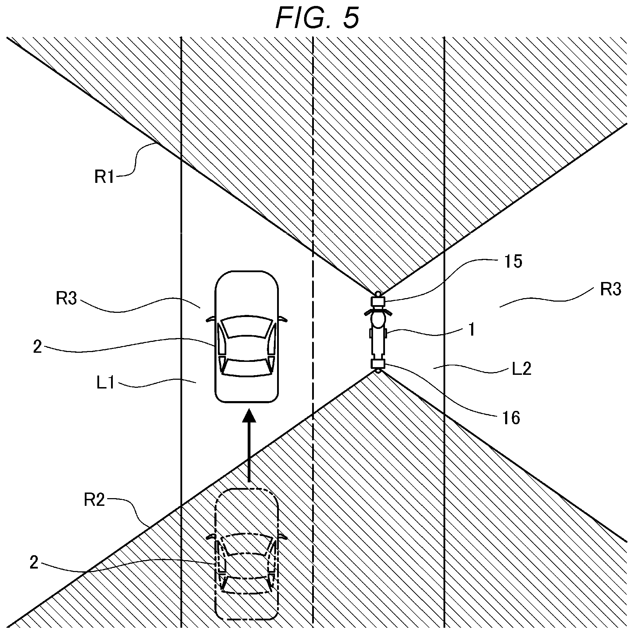

Fig. 5 is a diagram showing a state in which the other vehicle (specifically, a vehicle 2) is located in the blind spot area R3. In the example of Fig. 5, as in the example of Fig. 3 described above, the saddle-type vehicle 1 is traveling in the right lane L2. In the example of Fig. 5, the vehicle 2 is traveling in the left lane L1. In Fig. 5, the current position of the vehicle 2 is shown by a solid line, and the past position of the vehicle 2 is shown by a two-dot chain line. The vehicle 2 travels at a higher speed than the saddle-type vehicle 1 and moves from a position diagonally behind the saddle-type vehicle 1 (specifically, from the position indicated by the two-dot chain line) to a position on the left side of the saddle-type vehicle 1 (specifically, to the position indicated by the solid line).

In the example of Fig. 5, the execution unit 22 may estimate that the vehicle 2 is currently located in the blind spot area R3 by using the surrounding environment information obtained by each of the first camera 15 and the second camera 16.

Specifically, the execution unit 22 may predict the future behavior of each vehicle around the saddle-type vehicle 1 based on the surrounding environment information obtained by each of the first camera 15 and the second camera 16. Then, the execution unit 22 estimates the presence or absence of other vehicles in the blind spot area R3 based on the prediction result of the future behavior of each vehicle.

Examples of the surrounding environment information used for the estimation in S102 include positional relationship information between the saddle-type vehicle 1 and a vehicle traveling in at least one of the detection area R1 of the first camera 15, which is diagonally in front of the saddle-type vehicle 1, and the detection area R2 of the second camera 16, which is diagonally behind the saddle-type vehicle 1.

For example, in the example of Fig. 5, the second camera 16 may detect the vehicle 2 in the detection area R2 when the vehicle 2 is traveling at the position indicated by the two-dot chain line diagonally behind the saddle-type vehicle 1. Accordingly, the second camera 16 may acquire the positional relationship information between the saddle-type vehicle 1 and the vehicle 2 in the detection area R2.

The positional relationship information between the saddle-type vehicle 1 and the vehicle 2 is information on the positional relationship between the saddle-type vehicle 1 and the vehicle 2, and may include, for example, information on relative position, relative distance, relative speed, relative acceleration, relative jerk or passing time difference between the saddle-type vehicle 1 and the vehicle 2. The positional relationship information may include information on a component in a lane width direction and information on a component in the front and rear directions. In addition, the positional relationship information may include not only the current positional relationship between the saddle-type vehicle 1 and the vehicle 2, but also information on predicted future positional relationship. Further, the positional relationship information may be other information that can be substantially converted into these types of information.

In addition, for example, when a transition occurs from a state in which the vehicle 2 is seen in the image captured by the second camera 16 to a state in which the vehicle 2 is no longer seen in the image, the execution unit 22 may acquire the relative movement direction of the vehicle 2 with respect to the saddle-type vehicle 1 as the positional relationship information, based on the direction in which the vehicle 2 in the image moved (that is, the direction in which the vehicle 2 in the image exits the field of view of the second camera 16) accompanying this state transition.

Then, the execution unit 22 may predict the future behavior of the vehicle 2 based on the positional relationship information obtained by the second camera 16, and based on the prediction result, may estimate that the vehicle 2 is currently located in the blind spot area R3. For example, the execution unit 22 may predict a future change in the relative position of the saddle-type vehicle 1 with respect to the vehicle 2 by predicting a future change in the relative speed of the saddle-type vehicle 1 with respect to the vehicle 2 based on the current relative speed and the relative acceleration of the saddle-type vehicle 1 with respect to the vehicle 2. The execution unit 22 may estimate that the vehicle 2 is currently located in the blind spot area R3 based on the prediction results.

When the vehicle 2 is located in the detection area R1 of the first camera 15, the first camera 15 may detect the vehicle 2 in the detection area R1. Accordingly, in that case, the execution unit 22 may predict the future behavior of the vehicle 2 based on the positional relationship information obtained by the first camera 15. Accordingly, for example, when the vehicle 2 moves from the detection area R1 of the first camera 15 to the blind spot area R3, the execution unit 22 may estimate that the vehicle 2 is currently located in the blind spot area R3 based on the positional relationship information obtained by the first camera 15.

Examples of the surrounding environment information used for the estimation in S102 include lighting status information of a lamp of the vehicle traveling in at least one of the detection area R1 of the first camera 15, which is diagonally in front of the saddle-type vehicle 1, and the detection area R2 of the second camera 16, which is diagonally behind the saddle-type vehicle 1.

For example, in the example of Fig. 5, as described above, the second camera 16 may detect the vehicle 2 in the detection area R2 when the vehicle 2 is traveling at the position indicated by the two-dot chain line diagonally behind the saddle-type vehicle 1. Accordingly, the second camera 16 may acquire the lighting status information of the lamp of the vehicle 2 in the detection area R2.

The lighting status information of the lamp of the vehicle 2 is information related to the lighting status of the lamp of the vehicle 2, and may include, for example, information such as a lighting status of turn signals of the vehicle 2 and a lighting status of a brake lamp of the vehicle 2. Further, the lighting status information may be other information that can be substantially converted into these types of information.

Then, the execution unit 22 may predict the future behavior of the vehicle 2 based on the lighting status information obtained by the second camera 16, and estimate that the vehicle 2 is currently located in the blind spot area R3 based on the prediction result. Specifically, the execution unit 22 may more accurately predict the future behavior of the vehicle 2 by further taking into account the lighting status information in addition to the positional relationship information obtained by the second camera 16. For example, the execution unit 22 may predict whether the vehicle 2 will decelerate, or whether the vehicle 2 will change lanes, based on the lighting status information. By taking these prediction results into account, the execution unit 22 may predict the future behavior of the vehicle 2 more accurately. Then, the execution unit 22 may estimate whether the vehicle 2 is currently located in the blind spot area R3 based on the prediction result of the future behavior of the vehicle 2.

When the vehicle 2 is located in the detection area R1 of the first camera 15, the first camera 15 may detect the vehicle 2 in the detection area R1. Accordingly, in that case, the execution unit 22 may predict the future behavior of the vehicle 2 based on the lighting status information obtained by the first camera 15. Accordingly, for example, when the vehicle 2 moves from the detection area R1 of the first camera 15 to the blind spot area R3, the execution unit 22 may estimate that the vehicle 2 is currently located in the blind spot area R3 based on the lighting status information obtained by the first camera 15.

Further, examples of the surrounding environment information used for the estimation in S102 include road information.

The road information is information on a road on which the saddle-type vehicle 1 is traveling, and may include information such as a lighting status of a traffic light installed on the road, a sign installed on the road, the presence or absence of a branch road, and the presence or absence of a parking space on the shoulder of the road. Further, the road information may be other information that can be substantially converted into these types of information. For example, in the example of Fig. 5, the first camera 15 and the second camera 16 may acquire the road information by capturing images of the traffic lights, signs, and the like installed on the road on which the saddle-type vehicle 1 and the vehicle 2 are traveling.

Then, the execution unit 22 may predict the future behavior of the vehicle 2 based on the road information obtained by at least one of the first camera 15 and the second camera 16, and based on the prediction result, may estimate that the vehicle 2 is currently located in the blind spot area R3. Specifically, the execution unit 22 may more accurately predict the future behavior of the vehicle 2 by further taking into account the road information in addition to the positional relationship information obtained by the second camera 16. For example, based on the above road information, the execution unit 22 may predict whether the vehicle 2 will decelerate in response to the traffic signal turning red. For example, the execution unit 22 may predict, based on the road information, which road the vehicle 2 will take at the branch road. For example, the execution unit 22 may predict based on the road information whether the vehicle 2 will stop in the parking space on the shoulder of the road. By taking these prediction results into account, the execution unit 22 may predict the future behavior of the vehicle 2 more accurately. Then, the execution unit 22 may estimate whether the vehicle 2 is currently located in the blind spot area R3 based on the prediction result of the future behavior of the vehicle 2.

In addition, in S102, the execution unit 22 may predict the future behavior of the vehicle 2 by taking into account both the lighting status information and the road information in addition to the positional relationship information, may predict the future behavior of the vehicle 2 by taking into account only one of the lighting status information and the road information, or may predict the future behavior of the vehicle 2 without taking into account either the lighting status information or the road information.

After S102 of Fig. 4, in S103, the execution unit 22 determines whether the other vehicle is estimated to be present in the blind spot area R3 according to the surrounding vehicle estimation.

When it is determined according to the surrounding vehicle estimation that the other vehicle is not estimated to be present in the blind spot area R3 (S103/NO), the process returns to S102. Meanwhile, when it is determined according to the surrounding vehicle estimation that the other vehicle is estimated to be present in the blind spot area R3 (S103/YES), the process proceeds to S104.

When YES is determined in S103, in S104, the execution unit 22 executes a notification operation of notifying the rider and returns to S102.

In the notification operation, the execution unit 22 notifies the rider of information indicating that the other vehicle is present in the blind spot area R3. For example, the notification operation may be executed by a display on the display device 13. However, the execution unit 22 may execute the notification operation by a method other than displaying on the display device 13. For example, the execution unit 22 may execute the notification operation by using a display device provided on an item (e.g., helmet) worn by the rider. Further, for example, the execution unit 22 may execute the notification operation by using a sound output device or a vibration generating device provided on the saddle-type vehicle 1 or the item worn by the rider.

In addition, when the parked vehicle is present in the blind spot area R3, the execution unit 22 may determine YES in S103. In that case, since the saddle-type vehicle 1 moves away from the parked vehicle early, it is less necessary to notify the rider of the presence of the vehicle. Accordingly, in that case, the execution unit 22 may not execute the notification operation.

In the first process described above, the execution unit 22 estimates, as the surrounding vehicle estimation, the presence or absence of the other vehicles in the blind spot area R3 based on the surrounding environment information obtained by each of the first camera 15 and the second camera 16, and controls the notification operation based on the result of the surrounding vehicle estimation. As a result, it is possible to execute the notification operation after determining the presence or absence of other vehicles in the blind spot area R3 on the sides of the saddle-type vehicle 1. Consequently, safety can be improved.

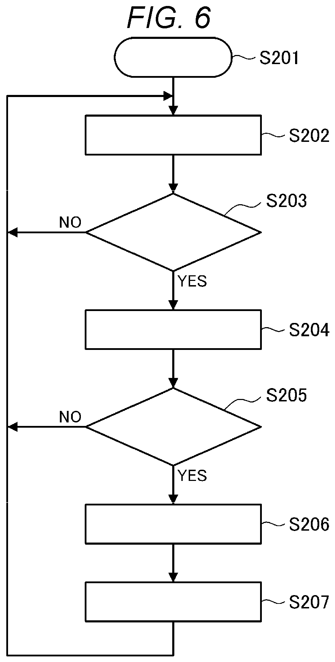

Fig. 6 is a flowchart showing an example of a flow of the second process executed by the control device 20. The control flow shown in Fig. 6 starts during the execution of the control mode in which the adaptive cruise control is executed and ends in response to the end of the control mode. S201 in Fig. 6 corresponds to the start of the control flow shown in Fig. 6.

When the control flow shown in Fig. 6 starts, in S202, the execution unit 22 estimates the presence or absence of other vehicles in the blind spot area R3. Since the process of S202 is similar to the process of S102 of Fig. 4 described above, a detailed description thereof will be omitted.

After S202, in S203, the execution unit 22 determines whether the other vehicle is estimated to be present in the blind spot area R3 according to the surrounding vehicle estimation.

When it is determined according to the surrounding vehicle estimation that the other vehicle is not estimated to be present in the blind spot area R3 (S203/NO), the process returns to S202. Meanwhile, when it is determined according to the surrounding vehicle estimation that the other vehicle is estimated to be present in the blind spot area R3 (S203/YES), the process proceeds to S204.

When YES is determined in S203, in S204, the execution unit 22 estimates whether the other vehicle located in the blind spot area R3 is likely to cut in front of the saddle-type vehicle 1.

In S204, the execution unit 22 estimates whether the other vehicle located in the blind spot area R3 is likely to cut in front of the saddle-type vehicle 1, based on the surrounding environment information obtained by each of the first camera 15 and the second camera 16.

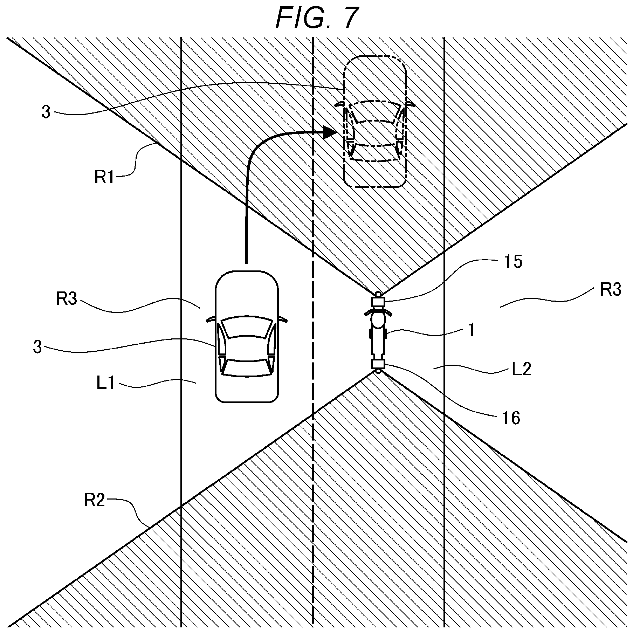

Fig. 7 is a diagram showing a state in which the other vehicle (specifically, a vehicle 3) located in the blind spot area R3 is likely to cut in front of the saddle-type vehicle 1. In the example of Fig. 7, as in the example of Fig. 3 described above, the saddle-type vehicle 1 is traveling in the right lane L2. In the example of Fig. 7, the vehicle 3 is traveling in the left lane L1. In the example of Fig. 7, the current position of the vehicle 3 is a position on the left side of the saddle-type vehicle 1 as shown by a solid line.

In the example of Fig. 7, the execution unit 22 may estimate whether the vehicle 3 located in the blind spot area R3 is likely to cut in front of the saddle-type vehicle 1 as shown by the two-dot chain line by using the surrounding environment information obtained by each of the first camera 15 and the second camera 16.

Specifically, the execution unit 22 may predict the future behavior of each vehicle around the saddle-type vehicle 1 based on the surrounding environment information obtained by each of the first camera 15 and the second camera 16. Then, based on the prediction result of the future behavior of each vehicle, the execution unit 22 estimates whether the other vehicle in the blind spot area R3 is likely to cut in front of the saddle-type vehicle 1.

Examples of the surrounding environment information used for the estimation in S204 include positional relationship information between the saddle-type vehicle 1 and a vehicle traveling in at least one of the detection area R1 of the first camera 15, which is diagonally in front of the saddle-type vehicle 1 and the detection area R2 of the second camera 16, which is diagonally behind the saddle-type vehicle 1.

For example, in the example of Fig. 7, the vehicle 3 is currently located in the blind spot area R3, but in the past, the vehicle 3 was located in the detection area R1 or the detection area R2. Accordingly, in the past, the first camera 15 or the second camera 16 may have detected the vehicle 3. Accordingly, in the past, the first camera 15 or the second camera 16 may have acquired the positional relationship information between the saddle-type vehicle 1 and the vehicle 3.

Then, the execution unit 22 may predict the future behavior of the vehicle 3 based on the positional relationship information obtained in the past, and based on the prediction result, may estimate whether the vehicle 3 located in the blind spot area R3 is likely to cut in front of the saddle-type vehicle 1. For example, the execution unit 22 may predict the future change in the relative position of the saddle-type vehicle 1 with respect to the vehicle 3 by predicting the future change in the relative speed of the saddle-type vehicle 1 with respect to the vehicle 3 based on the positional relationship information obtained in the past. Based on the prediction result, the execution unit 22 may estimate whether the vehicle 3 is likely to cut in front of the saddle-type vehicle 1. For example, when the vehicle 3 is gradually decelerating and the traveling position of the vehicle 3 in the lane width direction is gradually approaching the lane L2, the execution unit 22 may estimate that the vehicle 3 is likely to cut in front of the saddle-type vehicle 1.

Examples of the surrounding environment information used for the estimation in S204 include the lighting status information of the lamp of the vehicle traveling in at least one of the detection area R1 of the first camera 15, which is diagonally in front of the saddle-type vehicle 1, and the detection area R2 of the second camera 16, which is diagonally behind the saddle-type vehicle 1.

For example, in the example of Fig. 7, the vehicle 3 is currently located in the blind spot area R3, but in the past, the vehicle 3 was located in the detection area R1 or the detection area R2. Accordingly, in the past, the first camera 15 or the second camera 16 may have detected the vehicle 3. Accordingly, in the past, the first camera 15 or the second camera 16 may have acquired the lighting status information of the lamp of the vehicle 3.

Then, the execution unit 22 may predict the future behavior of the vehicle 3 based on the lighting status information obtained in the past, and based on the prediction result, may estimate whether the vehicle 3 located in the blind spot area R3 is likely to cut in front of the saddle-type vehicle **1.** Specifically, the execution unit 22 may more accurately predict the future behavior of the vehicle 3 by further taking into account the lighting status information in addition to the positional relationship information. For example, the execution unit 22 may predict whether the vehicle 3 will decelerate or whether the vehicle 3 will change lanes based on the lighting status information. By taking these prediction results into account, the execution unit 22 may predict the future behavior of the vehicle 3 more accurately. Then, based on the prediction result of the future behavior of the vehicle 3, the execution unit 22 may estimate whether the vehicle 3 is likely to cut in front of the saddle-type vehicle **1.**

Further, examples of the surrounding environment information used for the estimation in S204 include road information.

Then, the execution unit 22 may predict the future behavior of the vehicle 3 based on the road information obtained by at least one of the first camera 15 and the second camera 16, and based on the prediction result, may estimate whether the vehicle 3 located in the blind spot area R3 is likely to cut in front of the saddle-type vehicle **1.** Specifically, the execution unit 22 may more accurately predict the future behavior of the vehicle 3 by further taking the road information into account in addition to the positional relationship information. For example, the execution unit 22 may predict which road the vehicle 3 will take at the branch road based on the road information. By taking these prediction results into account, the execution unit 22 may predict the future behavior of the vehicle 3 more accurately. Then, the execution unit 22 may estimate whether the vehicle 3 is likely to cut in front of the saddle-type vehicle 1 based on the prediction result of the future behavior of the vehicle 3.

In addition, in S204, the execution unit 22 may predict the future behavior of the vehicle 3 by taking into account both the lighting status information and the road information in addition to the positional relationship information, may predict the future behavior of the vehicle 3 by taking into account only one of the lighting status information and the road information, or may predict the future behavior of the vehicle 3 without taking into account either the lighting status information or the road information.

After S204 of Fig. 6, in S205, the execution unit 22 determines whether it is estimated according to the surrounding vehicle estimation that the other vehicle is likely to cut in front of the saddle-type vehicle 1.

When it is determined according to the surrounding vehicle estimation that it is not estimated that the other vehicle is likely to cut in front of the saddle-type vehicle 1 (S205/NO), the process returns to S202. Meanwhile, when it is determined according to the surrounding vehicle estimation that it is estimated that the other vehicle is likely to cut in front of the saddle-type vehicle 1 (S205/YES), the process proceeds to S206.

When YES is determined in S205, in S206, the execution unit 22 executes a traveling position adjustment operation of automatically controlling the speed of the saddle-type vehicle 1 so that the traveling position of the saddle-type vehicle 1 is adjusted rearward, as compared to the case where it is not estimated according to the surrounding vehicle estimation that the other vehicle is likely to cut in (that is, when NO is determined in S205).

For example, in the example of Fig. 7, when it is estimated that the vehicle 3 located in the blind spot area R3 is likely to cut in front of the saddle-type vehicle 1, the execution unit 22 executes the traveling position adjustment operation. In the traveling position adjustment operation, for example, the execution unit 22 adjusts the traveling position of the saddle-type vehicle 1 rearward by causing deceleration of the saddle-type vehicle 1, as compared to the case where the traveling position adjustment operation is not executed. In addition, if the saddle-type vehicle 1 is already decelerating when the traveling position adjustment operation is started, the execution unit 22 may increase the deceleration rate of the saddle-type vehicle 1 during the traveling position adjustment operation.

Here, when the vehicle 3 cuts in front of the saddle-type vehicle 1, the vehicle 3 does not always cut in while maintaining a large inter-vehicle distance from the saddle-type vehicle 1, and the vehicle 3 may cut in at a position close to the saddle-type vehicle 1. Then, when the vehicle 3 cuts in front of the saddle-type vehicle 1, the execution unit 22 sets the vehicle 3 as a preceding vehicle targeted for positional relationship adjustment in the adaptive cruise control, and adjusts the positional relationship between the saddle-type vehicle 1 and the vehicle 3 to a target positional relationship. As a result, a strong deceleration may occur in the saddle-type vehicle 1. Then, by executing the traveling position adjustment operation before the vehicle 3 cuts in front of the saddle-type vehicle 1, a large inter-vehicle distance may be ensured between the saddle-type vehicle 1 and the vehicle 3 immediately after the vehicle 3 cuts in front of the saddle-type vehicle 1, thus reducing the occurrence of strong deceleration of the saddle-type vehicle 1.

In addition, as described above, during the execution of the control mode, there are a state in which the adaptive cruise control is executed and a state in which the adaptive cruise control is temporarily suspended.

During the execution of the adaptive cruise control, when it is estimated according to the surrounding vehicle estimation (S204 in the above example) that the cut-in is likely to occur, the execution unit 22 executes, as the traveling position adjustment operation, a target positional relationship correction operation of correcting the target positional relationship. For example, the execution unit 22 lengthens the target passing time difference or the target inter-vehicle distance to cause deceleration of the saddle-type vehicle 1 or increase the deceleration rate of the saddle-type vehicle **1.** As a result, the traveling position of the saddle-type vehicle 1 may be adjusted rearward, as compared to the case where the traveling position adjustment operation is not executed. That is, the inter-vehicle distance between the saddle-type vehicle 1 and a preceding vehicle 4, or the passing time difference becomes greater than when the target positional relationship correction operation is not executed.

In a situation where the adaptive cruise control is temporarily suspended (that is, in a situation where the speed of the saddle-type vehicle 1 is adjusted to the target speed), when it is estimated according to the surrounding vehicle estimation (S204 in the above example) that the cut-in is likely to occur, the execution unit 22 lowers the target speed to cause deceleration of the saddle-type vehicle 1 or increase the deceleration rate of the saddle-type vehicle 1. As a result, the traveling position of the saddle-type vehicle 1 may be adjusted rearward, as compared to the case where the traveling position adjustment operation is not executed.

After S206 of Fig. 6, in S207, the execution unit 22 executes an evaluation of the traveling position adjustment operation and returns to S202.

The evaluation of the traveling position adjustment operation in S207 involves an evaluation of whether the behavior of the saddle-type vehicle 1 is properly controlled to improve safety by the traveling position adjustment operation executed in S206. Then, after evaluating the traveling position adjustment operation, the execution unit 22 controls the traveling position adjustment operation based on the result of the evaluation of the traveling position adjustment operation. Specifically, when it is evaluated that the behavior of the saddle-type vehicle 1 is not properly controlled in the evaluation of the traveling position adjustment operation in S207, the execution unit 22 corrects the next traveling position adjustment operation to ensure that the behavior of the saddle-type vehicle 1 is properly controlled.

For example, in the evaluation of the traveling position adjustment operation in S207, the execution unit 22 determines whether the deceleration rate of the saddle-type vehicle 1 after the other vehicle cuts in front of the saddle-type vehicle 1 is less than a threshold value. The threshold value is an indicator for determining whether the behavior of the saddle-type vehicle 1 is properly controlled to improve safety.

Then, in S207, when it is determined that the deceleration rate of the saddle-type vehicle 1 after the other vehicle cuts in is less than the threshold value, the execution unit 22 evaluates that the behavior of the saddle-type vehicle 1 is properly controlled to improve safety by the traveling position adjustment operation executed in S206. In such a case, during the next traveling position adjustment operation, the execution unit 22 decelerates the saddle-type vehicle 1 at a deceleration rate similar to the deceleration rate generated by the current traveling position adjustment operation.

Meanwhile, in S207, when it is determined that the deceleration rate of the saddle-type vehicle 1 after the other vehicle cuts in is equal to or greater than the threshold value, the execution unit 22 evaluates that the behavior of the saddle-type vehicle 1 is not properly controlled to improve safety by the traveling position adjustment operation executed in S206. In such a case, during the next traveling position adjustment operation, the execution unit 22 decelerates the saddle-type vehicle 1 at a deceleration rate greater than the deceleration rate generated by the current traveling position adjustment operation.

In addition, when the target positional relationship correction operation is executed as the traveling position adjustment operation in S206, in S207, the execution unit 22 executes an evaluation of the target positional relationship correction operation and after evaluating the target positional relationship correction operation, controls the target positional relationship correction operation based on the result of the evaluation of the target positional relationship correction operation. Even in this case, for example, when it is determined that the deceleration rate of the saddle-type vehicle 1 after the other vehicle cuts in is equal to or greater than the threshold value, the execution unit 22 evaluates that the behavior of the saddle-type vehicle 1 is not properly controlled to improve safety by the target positional relationship correction operation executed in S206. Then, in this case, during the next target positional relationship correction operation, the execution unit 22 decelerates the saddle-type vehicle 1 at a deceleration rate greater than the deceleration rate generated by the target positional relationship correction operation.

In the second process described above, the execution unit 22 executes, as the surrounding vehicle estimation, an estimation of the presence or absence of other vehicles in the blind spot area R3 and an estimation of whether the other vehicle located in the blind spot area R3 is likely to cut in front of the saddle-type vehicle 1, based on the surrounding environment information obtained by each of the first camera 15 and the second camera 16, and controls the speed control operation based on the result of the surrounding vehicle estimation. As a result, it is possible to execute the speed control operation after determining the presence or absence of other vehicles in the blind spot area R3 on the sides of the saddle-type vehicle 1. Consequently, safety can be improved.

In addition, although the first process and the second process are respectively described as the example processes related to the surrounding vehicle estimation, the execution unit 22 may execute only one of the first process and the second process, or execute both the first process and the second process.

The example processes executed by the control device 20 have been described above. However, the processes executed by the control device 20 may be modifications of the example processes described above.

For example, the execution unit 22 may determine the visibility of at least one of the first camera 15 and the second camera 16, and based on the result of determining the visibility, may execute a traveling position assistance operation of recommending or correcting a traveling position of the saddle-type vehicle 1. The visibility of the camera corresponds, for example, to an indicator representing the clarity of the field of view of the camera.

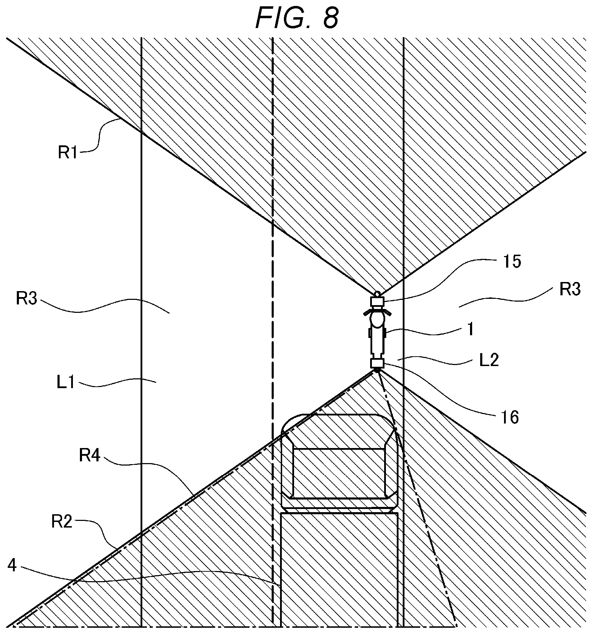

Fig. 8 is a diagram showing an example of a situation in which the visibility of the second camera 16 is reduced. In the example of Fig. 8, as in the example of Fig. 3 described above, the saddle-type vehicle 1 is traveling in the right lane L2. Here, in the example of Fig. 3, the saddle-type vehicle 1 is traveling near the center in the lane width direction in the lane L2. Meanwhile, in the example of Fig. 8, the saddle-type vehicle 1 is traveling near a right end in the lane width direction of the lane L2. In addition, in the example of Fig. 8, a vehicle 4 is traveling behind the saddle-type vehicle 1 in the lane L2. The vehicle 4 is a large truck.

In the example of Fig. 8, a partial area R4 (specifically, an area indicated by a single dot chain line) of the detection area R2 of the second camera 16 is obstructed by the vehicle 4. In this way, when the large vehicle 4 is located behind the saddle-type vehicle 1, the visibility of the second camera 16 tends to decrease. In particular, as shown in the example of Fig. 8, when the saddle-type vehicle 1 is traveling near the right end in the lane width direction, the visibility to the left rear side of the saddle-type vehicle 1 in the detection area R2 of the second camera 16 tends to decrease.

Here, for example, the execution unit 22 determines whether the visibility of each camera is lower than a reference. The reference is set so as to appropriately determine whether the entire or most of the field of view of each camera is obstructed. A case where the entire or most of the field of view of the camera is obstructed corresponds to a case where the visibility of the camera is lower than the reference.

For example, the execution unit 22 may determine the visibility based on the image obtained by each camera. For example, the execution unit 22 may execute an image recognition process on the image obtained by the camera to acquire information on a size of a subject in the image, and determine the visibility based on that information. For example, the execution unit 22 may determine that the visibility is lower than the reference when an area ratio of an area occupied by one subject to the total area of the image obtained by the camera is greater than a threshold value.

Then, for example, when it is determined that the visibility of at least one of the first camera 15 and the second camera 16 is lower than the reference, the execution unit 22 executes the traveling position assistance operation of recommending or correcting the traveling position of the saddle-type vehicle 1.

For example, in the traveling position assistance operation, the execution unit 22 notifies the rider that the vicinity of the center in the lane width direction is recommended as the traveling position in the lane width direction of the saddle-type vehicle 1. For example, the execution unit 22 notifies the rider of the recommended traveling position in the lane width direction by using the display device 13. In addition, in the traveling position assistance operation, the execution unit 22 may recommend the traveling position of the saddle-type vehicle 1 in the front and rear directions, in addition to the traveling position in the lane width direction of the saddle-type vehicle 1. For example, in the example of Fig. 8, in the traveling position assistance operation, the execution unit 22 may notify the rider that a position away from the vehicle 4 is recommended as the traveling position of the saddle-type vehicle 1 in the front and rear directions.

However, the execution unit 22 may execute the traveling position assistance operation by a method other than displaying on the display device 13. For example, the execution unit 22 may execute the traveling position assistance operation by using a display device provided on an item (e.g., helmet) worn by the rider. For example, the execution unit 22 may execute the traveling position assistance operation by using a sound output device or a vibration generating device provided on the saddle-type vehicle 1 or the item worn by the rider.

For example, in the traveling position assistance operation, the execution unit 22 may correct the traveling position in the lane width direction of the saddle-type vehicle 1. For example, in the traveling position assistance operation, the execution unit 22 may correct (that is, actively change) the traveling position of the saddle-type vehicle 1 in the lane width direction by automatically rotating the steering mechanism of the saddle-type vehicle 1, reducing the steering operation load, generating vibrations in the steering, or the like. In addition, in the traveling position assistance operation, the execution unit 22 may correct the traveling position of the saddle-type vehicle 1 in the front and rear directions, in addition to the traveling position in the lane width direction of the saddle-type vehicle 1. For example, in the traveling position assistance operation, the execution unit 22 may correct (that is, actively change) the traveling position of the saddle-type vehicle 1 in the front and rear directions by automatically accelerating or decelerating the saddle-type vehicle 1, and the like.

In addition, for example, in a situation where the other vehicle is estimated to be present in the blind spot area R3 according to the surrounding vehicle estimation, the execution unit 22 may execute an evaluation of the surrounding vehicle estimation based on the surrounding environment information obtained by at least one of the first camera 15 and the second camera 16, and may control the rider assistance operation based on the result of the evaluation of the surrounding vehicle estimation. For example, in a situation where the other vehicle is estimated to be present in the blind spot area R3 according to the surrounding vehicle estimation, it may be determined that a vehicle different from the other vehicle mentioned above enters the blind spot area R3. In that case, it is considered that a situation has arisen in which the other vehicle mentioned above has already exited the blind spot area R3.

For example, such a situation may arise when the other vehicle mentioned above moves forward from the blind spot area R3 and enters the detection area R1 of the first camera 15, but the first camera 15 fails to detect the other vehicle. Further, for example, such a situation may arise when the other vehicle mentioned above enters the branch road from the blind spot area R3. In such a case, the execution unit 22 evaluates that the surrounding vehicle estimation that the other vehicle is present in the blind spot area R3 is incorrect. Then, the execution unit 22 may discard the estimation result that the other vehicle is present in the blind spot area R3, delete it from memory, and then continue the rider assistance operation based on the surrounding vehicle estimation and the result of the evaluation of the surrounding vehicle estimation.

### <Effects of Control Device>

The effects of the control device 20 according to the embodiment of the present disclosure will be described.

The control device 20 includes the execution unit 22 configured to execute the rider assistance operation of assisting the rider. The saddle-type vehicle 1 includes at least one first camera 15 provided at a front part of the saddle-type vehicle 1 and facing forward of the saddle-type vehicle 1, and at least one second camera 16 provided at a rear part of the saddle-type vehicle 1 and facing rearward of the saddle-type vehicle 1. The blind spot areas R3, which are not included in either the detection area R1 of the first camera 15 or the detection area R2 of the second camera 16, are present on the sides of the saddle-type vehicle 1. Then, the execution unit 22 executes the surrounding vehicle estimation, which is the estimation regarding other vehicles including the estimation of the presence or absence of the other vehicles in the blind spot area R3 based on the surrounding environment information obtained by each of the first camera 15 and the second camera 16, and controls the rider assistance operation based on the result of the surrounding vehicle estimation. As a result, it is possible to assist the rider after determining the presence or absence of other vehicles in the blind spot areas R3 on the sides of the saddle-type vehicle 1. Consequently, safety can be improved.

In particular, in the saddle-type vehicle 1, the visibility of the rider to the surroundings is lower compared to the four-wheeled automobiles or the like, due to factors such as the agile movement of the saddle-type vehicle 1, the limited range of visibility with the side mirror, and so on. Accordingly, determining the presence or absence of other vehicles in the blind spot area R3 becomes especially important for improving safety. Accordingly, safety can be effectively enhanced by the process by the execution unit 22.

In addition, the total length (that is, the length in the front and rear directions) of the saddle-type vehicle 1 is shorter than the total length of the four-wheeled automobile or the like. Accordingly, the blind spot areas R3 on the sides of the saddle-type vehicle 1 are smaller than the blind spot areas on the sides of the four-wheeled automobile or the like. Accordingly, in the saddle-type vehicle 1, the presence or absence of the other vehicle in the blind spot area R3 may be accurately determined by executing the surrounding vehicle estimation based on the surrounding environment information obtained by each of the first camera 15 and the second camera 16.

Preferably, in the control device 20, the rider assistance operation includes the notification operation of notifying the rider. As a result, it is possible to execute the notification operation after determining the presence or absence of other vehicles in the blind spot areas R3 on the sides of the saddle-type vehicle 1. Consequently, the improved safety is appropriately achieved.

Preferably, in the control device 20, when the other vehicle is estimated to be present in the blind spot area R3 according to the surrounding vehicle estimation, the execution unit 22 executes the notification operation. As a result, it is possible to notify the rider that the other vehicle is located in the blind spot area R3. Accordingly, the improved safety is more appropriately achieved.

Preferably, in the control device 20, the rider assistance operation includes the speed control operation (in the above example, the control mode in which the adaptive cruise control is executed) of automatically controlling the speed of the saddle-type vehicle 1. As a result, it is possible to execute the speed control operation after determining the presence or absence of other vehicles in the blind spot areas R3 on the sides of the saddle-type vehicle 1. Consequently, the improved safety is appropriately achieved.

Preferably, in the control device 20, when the other vehicle is estimated to be present in the blind spot area R3 according to the surrounding vehicle estimation, the execution unit 22 further executes the estimation of whether the other vehicle is likely to cut in front of the saddle-type vehicle 1, and when it is estimated that the cut-in is likely to occur according to the surrounding vehicle estimation, in the speed control operation, the execution unit 22 executes the traveling position adjustment operation of automatically controlling the speed of the saddle-type vehicle 1 so that the traveling position of the saddle-type vehicle 1 is adjusted rearward, as compared to the case where it is not estimated according to the surrounding vehicle estimation that the other vehicle is likely to cut in. As a result, when the other vehicle cuts in front of the saddle-type vehicle 1, the occurrence of strong deceleration of the saddle-type vehicle 1 can be prevented. Accordingly, the improved safety is more appropriately achieved.

Preferably, in the control device 20, the speed control operation includes the positional relationship adjustment operation (the adaptive cruise control in the above example) of adjusting the positional relationship between the saddle-type vehicle 1 and the preceding vehicle of the saddle-type vehicle 1 to the target positional relationship, and the execution unit 22 executes, as the traveling position adjustment operation, the target positional relationship correction operation of correcting the target positional relationship, when it is estimated according to the surrounding vehicle estimation that the cut-in is likely to occur during the execution of the positional relationship adjustment operation. As a result, when the other vehicle cuts in front of the saddle-type vehicle 1 during the execution of the positional relationship adjustment operation, the occurrence of strong deceleration of the saddle-type vehicle 1 can be prevented. Accordingly, the improved safety is more appropriately achieved.

Preferably, in the control device 20, after the traveling position adjustment operation is executed, the execution unit 22 executes the evaluation of the traveling position adjustment operation, and after the evaluation of the traveling position adjustment operation is executed, controls the traveling position adjustment operation based on the result of the evaluation of the traveling position adjustment operation. As a result, the traveling position adjustment operation may be corrected so that the behavior of the saddle-type vehicle 1 is properly controlled.

Preferably, in the control device 20, after executing the target positional relationship correction operation, the execution unit 22 executes the evaluation of the target positional relationship correction operation, and after executing the evaluation of the target positional relationship correction operation, controls the target positional relationship correction operation based on the result of the evaluation of the target positional relationship correction operation. As a result, the target positional relationship correction operation may be corrected so that the behavior of the saddle-type vehicle 1 is properly controlled.

Preferably, in the control device 20, the surrounding environment information includes positional relationship information between the saddle-type vehicle 1 and a vehicle traveling in at least one of the detection area R1 of the first camera 15, which is diagonally in front of the saddle-type vehicle 1, and the detection area R2 of the second camera 16, which is diagonally behind the saddle-type vehicle 1. As a result, the surrounding vehicle estimation may be appropriately executed by using the positional relationship information.

Preferably, in the control device 20, the surrounding environment information includes the lighting status information of a lamp of a vehicle traveling in at least one of the detection area R1 of the first camera 15, which is diagonally in front of the saddle-type vehicle 1, and the detection area R2 of the second camera 16, which is diagonally behind the saddle-type vehicle 1. As a result, the surrounding vehicle estimation may be appropriately executed by using the lighting status information.

Preferably, in the control device 20, the surrounding environment information includes the road information. As a result, the surrounding vehicle estimation may be appropriately executed by using the road information.

Preferably, in the control device 20, the execution unit 22 determines the visibility of at least one of the first camera 15 and the second camera 16, and based on the result of determining the visibility, executes the traveling position assistance operation of recommending or correcting the traveling position of the saddle-type vehicle 1. As a result, when the visibility of at least one of the first camera 15 and the second camera 16 is lower than the reference, the traveling position of the saddle-type vehicle 1 may be recommended or corrected so that the visibility of at least one of the cameras is restored.

Preferably, in the control device 20, the number of the first camera 15 is one, and the number of the second camera 16 is one. As a result, the surrounding vehicle estimation and the rider assistance operation based on the surrounding vehicle estimation may be executed with the minimum number of cameras. Accordingly, the cost can be reduced.

Preferably, in the control device 20, in a situation where the other vehicle is estimated to be present in the blind spot area R3 according to the surrounding vehicle estimation, the execution unit 22 may execute the evaluation of the surrounding vehicle estimation based on the surrounding environment information obtained by at least one of the first camera 15 and the second camera 16, and may control the rider assistance operation based on the result of the evaluation of the surrounding vehicle estimation. As a result, for example, even when the surrounding vehicle estimation is incorrect, it is possible to appropriately continue the rider assistance operation based on the surrounding vehicle estimation and the result of the evaluation of the surrounding vehicle estimation.

The present disclosure is not limited to the embodiment described above. For example, only a part of the embodiment may be implemented.

## Claims

1. A control device 20 of a rider assistance system 100 for assisting a rider of a saddle-type vehicle 1, comprising:
an execution unit 22 configured to execute a rider assistance operation of assisting the rider, wherein
the saddle-type vehicle 1 includes at least one first camera 15 provided at a front part of the saddle-type vehicle 1 and facing forward of the saddle-type vehicle 1, and at least one second camera 16 provided at a rear part of the saddle-type vehicle 1 and facing rearward of the saddle-type vehicle 1,
a blind spot area R3, which is not included in either a detection area R1 of the first camera 15 or a detection area R2 of the second camera 16, is present on a side of the saddle-type vehicle 1, and
the execution unit 22 is configured to:
execute a surrounding vehicle estimation, which is an estimation regarding other vehicles including an estimation of the presence or absence of the other vehicles in the blind spot area R3 based on surrounding environment information obtained by each of the first camera 15 and the second camera 16; and
control the rider assistance operation based on a result of the surrounding vehicle estimation.

2. The control device according to claim 1, wherein the rider assistance operation includes a notification operation of notifying the rider.

3. The control device according to claim 2, wherein, when the other vehicle is estimated to be present in the blind spot area R3 according to the surrounding vehicle estimation, the execution unit 22 executes the notification operation.

4. The control device according to claim 1, wherein the rider assistance operation includes a speed control operation of automatically controlling a speed of the saddle-type vehicle 1.

5. The control device according to claim 4, wherein the execution unit 22 is configured to:
in the surrounding vehicle estimation, when the other vehicle is estimated to be present in the blind spot area R3, further estimate whether the other vehicle is likely to cut in front of the saddle-type vehicle 1; and
when it is estimated that the cut-in is likely to occur according to the surrounding vehicle estimation, in the speed control operation, execute a traveling position adjustment operation of automatically controlling a speed of the saddle-type vehicle 1 so that a traveling position of the saddle-type vehicle 1 is adjusted rearward, as compared to a case where it is not estimated according to the surrounding vehicle estimation that the cut-in is likely to occur.

6. The control device according to claim 5, wherein the speed control operation includes a positional relationship adjustment operation of adjusting a positional relationship between the saddle-type vehicle 1 and a preceding vehicle of the saddle-type vehicle 1 to a target positional relationship, and
when it is estimated that the cut-in is likely to occur according to the surrounding vehicle estimation during the execution of the positional relationship adjustment operation, the execution unit 22 executes, as the traveling position adjustment operation, a target positional relationship correction operation of correcting the target positional relationship.

7. The control device according to claim 5, wherein the execution unit 22 is configured to:
after the traveling position adjustment operation is executed, execute an evaluation of the traveling position adjustment operation; and
after the evaluation of the traveling position adjustment operation is executed, control the traveling position adjustment operation based on a result of the evaluation of the traveling position adjustment operation.

8. The control device according to claim 6, wherein the execution unit 22 is configured to:
after executing the target positional relationship correction operation, execute an evaluation of the target positional relationship correction operation; and
after the evaluation of the target positional relationship correction operation is executed, control the target positional relationship correction operation based on a result of the evaluation of the target positional relationship correction operation.

9. The control device according to any one of claims 1 to 8, wherein the surrounding environment information includes positional relationship information between the saddle-type vehicle 1 and a vehicle traveling in at least one of the detection area R1 of the first camera 15, which is diagonally in front of the saddle-type vehicle 1, and the detection area R2 of the second camera 16, which is diagonally behind the saddle-type vehicle 1.

10. The control device according to any one of claims 1 to 8, wherein the surrounding environment information includes lighting status information of a lamp of a vehicle traveling in at least one of the detection area R1 of the first camera 15, which is diagonally in front of the saddle-type vehicle 1, and the detection area R2 of the second camera 16, which is diagonally behind the saddle-type vehicle 1.

11. The control device according to any one of claims 1 to 8, wherein the surrounding environment information includes road information.

12. The control device according to any one of claims 1 to 8, wherein the execution unit 22 is configured to:
determine a visibility of at least one of the first camera 15 and the second camera 16; and
execute a traveling position assistance operation of recommending or correcting a traveling position of the saddle-type vehicle 1 based on a result of determining the visibility.

13. The control device according to any one of claims 1 to 8, wherein
the number of the first camera 15 is one, and
the number of the second camera 16 is one.

14. The control device according to any one of claims 1 to 8, wherein, in a situation where the other vehicle is estimated to be present in the blind spot area R3 according to the surrounding vehicle estimation, the execution unit 22 executes an evaluation of the surrounding vehicle estimation based on the surrounding environment information obtained by at least one of the first camera 15 and the second camera 16, and controls the rider assistance operation based on a result of the evaluation of the surrounding vehicle estimation.

15. A control method of a rider assistance system 100 for assisting a rider of a saddle-type vehicle 1, the method comprising:
executing, by an execution unit 22 of a control device 20, a rider assistance operation of assisting the rider, wherein
the saddle-type vehicle 1 includes at least one first camera 15 provided at a front part of the saddle-type vehicle 1 and facing forward of the saddle-type vehicle 1, and at least one second camera 16 provided at a rear part of the saddle-type vehicle 1 and facing rearward of the saddle-type vehicle 1,
a blind spot area R3, which is not included in either a detection area R1 of the first camera 15 or a detection area R2 of the second camera 16, is present on a side of the saddle-type vehicle 1, and
the execution unit 22 is configured to:
execute a surrounding vehicle estimation, which is an estimation regarding other vehicles including an estimation of the presence or absence of the other vehicles in the blind spot area R3 based on surrounding environment information obtained by each of the first camera 15 and the second camera 16; and
control the rider assistance operation based on a result of the surrounding vehicle estimation.
